# EUROPÄISCHE PATENTSCHRIFT

(11) **EP 4 251 493 B1**
(45) Veröffentlichungstag und Bekanntmachung des Hinweises auf die Patenterteilung: **20.08.2025**
(21) Anmeldenummer: 22702950.1
(22) Anmeldetag: 31.01.2022
(51) Int. Cl.: B62D 5/09, B62D 5/00, B62D 5/04

(54) **STEUERVORRICHTUNG FÜR EINE HYDRAULISCHE LENKEINRICHTUNG**
CONTROL DEVICE FOR A HYDRAULIC STEERING APPARATUS
DISPOSITIF DE COMMANDE POUR UN APPAREIL DE DIRECTION HYDRAULIQUE

(30) Priorität: 10.02.2021 DE 102021000686
(43) Veröffentlichungstag der Anmeldung: 04.10.2023
(73) Patentinhaber: Hydac New Technologies GmbH, 66280 Sulzbach/ Saar (DE)
(72) Erfinder: BERGMANN, Erhard, 19079 Banzkow (Ortsteil Mirow) (DE); DE LA MOTTE, Markus, 19300 Muchow (DE); FUNK, Helmut, 19372 Karrenzin (DE)
(74) Vertreter: Bartels und Partner, Patentanwälte
(86) Internationale Anmeldenummer: PCT/EP2022/052232
(87) Internationale Veröffentlichungsnummer: WO 2022/171477

(56) Entgegenhaltungen:
- EP-B1- 2 254 785
- US-A1- 2008 053 740
- US-A1- 2008 053 740
- US-B1- 6 273 468
- US-B1- 6 273 468

## Beschreibung

Die Erfindung betrifft eine Steuervorrichtung für eine hydraulische Lenkeinrichtung mit den Merkmalen im Oberbegriff von Anspruch 1.

Die nachveröffentlichte DE 10 2020 006 585 offenbart eine Steuervorrichtung für eine hydraulische Lenkeinrichtung, mit einer Steuereingabeeinrichtung in Form eines Handlenkrades, einer Steuereinheit und einem elektrisch betätigbaren Richtungsventil, das in seiner unbetätigten Stellung eine fluidführende Verbindung zwischen einer Druckversorgungsquelle und einem Lenkaktuator der Lenkeinrichtung sperrt und in seiner betätigten Stellung den Lenkaktuator in der ein oder anderen Lenkrichtung ansteuert. An die Steuereinheit sind eingangsseitig ein Lenkwinkel-Sollwertgeber, der den Lenkwinkel des Handlenkrades erfasst, und ausgangsseitig zwei Magnetbetätigungseinrichtungen für einen Ventilkolben des Richtungsventils angeschlossen. Die Strecke von dem Lenkwinkel-Sollwertgeber zu der einen bzw. der anderen Magnetbetätigungseinrichtung, auf der die Lenkwinkelsollwerte zunächst erfasst und dann durch die Steuereinheit verarbeitet werden, die schließlich in Abhängigkeit der verarbeiteten Sollwerte die jeweilige Magnetbetätigungseinrichtung für eine Verfahrbewegung des Ventilkolbens des Richtungsventils ansteuert, kann jeweils als ein Steuerpfad angesehen werden.

Die EP 2 254 785 B1 beschreibt eine Steuervorrichtung für eine hydraulische Lenkeinrichtung, mit einer Steuereingabeeinrichtung und einem elektrisch betätigbaren Ventil zur Ansteuerung eines Lenkaktuators der Lenkeinrichtung, das in Abhängigkeit von an der Steuereingabeeinrichtung erfassten Lenksollwerten über zumindest einen ersten Steuerpfad zwischen der Steuereingabeeinrichtung und dem Ventil elektrisch ansteuerbar ist, wobei die Steuervorrichtung derart eingerichtet ist, dass der jeweilige erste Steuerpfad in Abhängigkeit von an der Steuereingabeeinrichtung erfassten Lenksollwerten über jeweils einen diesem ersten Steuerpfad zugeordneten und sich zumindest teilweise von jedem ersten Steuerpfad unterscheidenden zweiten Steuerpfad außer Kraft setzbar ist, wenn dieser erste Steuerpfad in Kraft ist, oder in Kraft setzbar ist, wenn dieser außer Kraft ist, und wobei in dem jeweiligen zweiten Steuerpfad eine Signalerzeugungseinrichtung zum Erzeugen eines Schaltsignals in Abhängigkeit der an der Steuereingabeeinrichtung erfassten Lenksollwerte vorgesehen ist, mittels dem derjenige erste Steuerpfad entweder unterbrechbar oder schließbar ist, dem dieser zweite Steuerpfad zugeordnet ist.

Weitere Steuervorrichtungen gehen aus der US 6 273 468 B1 und der US 2008/053740 A1 hervor.

Der Erfindung liegt die Aufgabe zugrunde, eine Steuervorrichtung für eine hydraulische Lenkung bereitzustellen, die hinsichtlich ihrer Funktionssicherheit verbessert ist.

Eine dahingehende Aufgabe löst eine erfindungsgemäße Steuervorrichtung mit den Merkmalen des Patentanspruchs 1 in seiner Gesamtheit.

Demgemäß ist die erfindungsgemäße Steuervorrichtung dadurch charakterisiert, dass in dem jeweiligen ersten Steuerpfad ein Schalter angeordnet ist, der durch das jeweilige Schaltsignal angesteuert diesen ersten Steuerpfad entweder unterbricht oder schließt, dass zur Erzeugung des Lenksignals eines jeweiligen ersten Steuerpfades und zur Erzeugung des Schaltsignals, mittels dem dieser erste Steuerpfad unterbrechbar oder schließbar ist, jeweils zumindest ein Messfühler vorgesehen ist, die unabhängig voneinander Lenksollwerte an der Steuereingabeeinrichtung erfassen, dass ein Ventilkolben des Ventils mittels auf gegenüberliegenden Seiten des Ventilkolbens angeordneten Magnetbetätigungseinrichtungen in einander entgegengesetzte Richtungen verfahrbar ist, dass die Steuervorrichtung derart eingerichtet ist, dass, wenn der jeweilige Schalter in dem jeweiligen zu der einen Magnetbetätigungseinrichtung führenden ersten Steuerpfad eine Bestromung der einen Magnetbetätigungseinrichtung zulässt, gleichzeitig der jeweilige Schalter in dem jeweiligen zu der anderen Magnetbetätigungseinrichtung führenden ersten Pfad diesen ersten Pfad zumindest teilweise unterbricht und damit ein Bestromen der anderen Magnetbetätigungseinrichtung verhindert, und dass für die Steuerung der Bestromung der einen Magnetbetätigungseinrichtung mehrere Messfühler vorgesehen sind, die unabhängig von für die Steuerung der Bestromung der anderen Magnetbetätigungseinrichtung vorgesehenen mehreren Messfühlern Lenksollwerte an der Steuereingabeeinrichtung erfassen.

Es ist ferner vorgesehen, dass diese eine Steuereingabeeinrichtung, wie beispielsweise ein Handlenkrad oder ein Steuerknüppel, und ein elektrisch betätigbares Ventil zur Ansteuerung eines Lenkaktuators der Lenkeinrichtung aufweist, das in Abhängigkeit von an der Steuereingabeeinrichtung erfassten Lenksollwerten über zumindest einen ersten Steuerpfad zwischen der Steuereingabeeinrichtung und dem Ventil elektrisch ansteuerbar ist, wobei die Steuervorrichtung derart eingerichtet ist, dass der jeweilige erste Steuerpfad in Abhängigkeit von Sollwerten, also anderen an der Steuereingabeeinrichtung erfassten Lenksollwerten oder der Lenksollwerte, über jeweils einen diesem ersten Steuerpfad zugeordneten und sich zumindest teilweise von jedem ersten Steuerpfad unterscheidenden zweiten Steuerpfad außer Kraft setzbar ist, wenn dieser erste Steuerpfad in Kraft ist, oder in Kraft setzbar ist, wenn dieser erste Steuerpfad außer Kraft ist.

Durch die dahingehende Ausgestaltung der erfindungsgemäßen Steuervorrichtung wird eine jeweilige Magnetbetätigungseinrichtung des Ventils lediglich dann bestromt, wenn die diese Magnetbetätigungseinrichtung ansteuernde Einrichtung, wie beispielsweise eine Steuereinheit, über den ersten Steuerpfad einen Ansteuerstrom in Richtung der Betätigungseinrichtung abgibt und - im Vergleich zum eingangs genannten Stand der Technik - zusätzlich dieser erste Steuerpfad über den zweiten Steuerpfad nicht außer Kraft gesetzt ist bzw. in Kraft gehalten wird. Durch derart zumindest teilweise voneinander getrennte Steuerpfade, von denen der erste Steuerpfad über den zweiten Steuerpfad freigegeben oder gesperrt wird, ist eine weitere Auswirkung einer Fehlfunktion einer Vorrichtungskomponente, insbesondere der die Magnetbetätigungseinrichtung bestromenden Einrichtung, verhinderbar. Dabei stellt die weitere Auswirkung einer Fehlfunktion eine fehlerhafte Verfahrbewegung des Ventilkolbens des Ventils dar, die, falls die Steuervorrichtung Teil einer hydraulischen Lenkeinrichtung ist, fehlerhafte, also ungewollte, Lenkbewegungen zur Folge haben kann, die zu gefährlichen Fahrsituationen führen können. Diese werden durch die derart ausgebildete Steuervorrichtung vermieden. Daher ist die Steuervorrichtung im Ergebnis hinsichtlich ihrer Betriebssicherheit verbessert.

Bei einem besonders bevorzugten Ausführungsbeispiel ist vorgesehen, dass eine einzige, in jedem ersten Steuerpfad angeordnete Steuereinheit vorgesehen ist, der auf dem jeweiligen ersten Steuerpfad ein von den Lenksollwerten abhängiges Lenksignal zugeführt wird und die auf diesem ersten Steuerpfad ein Steuersignal zur Ansteuerung des Ventils abgibt, und dass jeder erste Steuerpfad durch die Steuereinheit hindurch und jeder zweite Steuerpfad an der Steuereinheit vorbei geführt ist. Dadurch hat die Steuereinheit auf ein Schaltsignal zum Unterbrechen oder Schließen des ersten Steuerpfades keinen Einfluss, so dass verhindert werden kann, dass eine fehlerhaft arbeitende Steuereinheit gleichzeitig ein jeweils fehlerhaftes Ansteuer- und Schaltsignal abgibt. Besonders bevorzugt unterscheidet sich jeder zweite Steuerpfad vollständig von jedem ersten Steuerpfad, so dass sich eine beliebige fehlerhafte Komponente der Steuervorrichtung nicht gleichzeitig fehlerhaft auf Komponenten des ersten und des zweiten Steuerpfads auswirken kann, wie es bei einer zumindest teilweise gemeinsamen Pfadstrecke von erstem und zweitem Steuerpfad mit gemeinsamen Komponenten der Fall sein kann.

In dem jeweiligen zweiten Steuerpfad ist eine Signalerzeugungseinrichtung zum Erzeugen eines Schaltsignals in Abhängigkeit der an der Steuereingabeeinrichtung erfassten Lenksollwerte vorgesehen, mittels dem derjenige erste Steuerpfad entweder unterbrechbar oder schließbar ist, dem dieser zweite Steuerpfad zugeordnet ist. In jedem ersten Steuerpfad ist jeweils ein Schalter angeordnet, der durch das Schaltsignal angesteuert diesen ersten Steuerpfad entweder unterbricht oder schließt. Dadurch ist der jeweilige erste Steuerpfad im Fehlerfall hardwaretechnisch zwischen der Steuereinheit und der jeweiligen Magnetbetätigungseinrichtung des Ventils unterbrechbar, so dass von der Steuereinheit keine Ansteuerung im Sinne einer Bestromung dieser Magnetbetätigungseinrichtung über den ersten Steuerpfad vorgenommen werden kann, selbst wenn die Steuereinheit eine dahingehende Bestromung ausgangsseitig abgibt.

Bei einem weiteren bevorzugten Ausführungsbeispiel ist vorgesehen, dass zur Erzeugung des Lenksignals eines jeweiligen ersten Steuerpfades und zur Erzeugung des Schaltsignals eines diesem zugeordneten zweiten Steuerpfades, mittels dem dieser erste Steuerpfad unterbrechbar oder schließbar ist, jeweils zumindest ein Messfühler vorgesehen ist, die unabhängig voneinander Lenksollwerte an der Steuereingabeeinrichtung erfassen. Dadurch ist sichergestellt, dass sich fehlerhaft erfasste Lenksollwerte nicht gleichzeitig auf das Lenksignal eines jeweiligen ersten Steuerpfades und das Schaltsignal des diesem zugeordneten zweiten Steuerpfades auswirken.

Der Ventilkolben des Ventils ist mittels auf gegenüberliegenden Seiten des Ventilkolbens angeordneten Magnetbetätigungseinrichtungen in einander entgegengesetzte Richtungen verfahrbar, wobei die Steuervorrichtung derart eingerichtet ist, dass, wenn der jeweilige Schalter in dem jeweiligen zu der einen Magnetbetätigungseinrichtung führenden ersten Steuerpfad eine Bestromung der einen Magnetbetätigungseinrichtung zulässt, gleichzeitig der jeweilige Schalter in dem jeweiligen zu der anderen Magnetbetätigungseinrichtung führenden ersten Pfad diesen ersten Pfad zumindest teilweise unterbricht und damit ein Bestromen der anderen Magnetbetätigungseinrichtung verhindert. Dadurch ist verhindert, dass der Ventilkolben im Fehlerfall einer Komponente des jeweiligen ersten Steuerpfades in seine beiden gegensätzlichen Verfahrrichtungen gleichzeitig betätigt wird, so dass ungewollten Verfahrbewegungen des Ventilkolbens entgegengewirkt ist, wodurch die Betriebssicherheit der Steuervorrichtung weiterhin verbessert ist.

Für die Steuerung der Bestromung der einen Magnetbetätigungseinrichtung sind mehrere Messfühler vorgesehen, die unabhängig von für die Steuerung der Bestromung der anderen Magnetbetätigungseinrichtung vorgesehenen mehreren Messfühlern Lenksollwerte an der Steuereingabeeinrichtung erfassen. Dadurch ist verhindert, dass sich fehlerhaft erfasste Lenksollwerte auf jeweilige Lenk- und/oder Schaltsignale für die Bestromung mehrerer Magnetbetätigungseinrichtungen gleichzeitig fehlerhaft auswirken.

Des Weiteren ist Gegenstand der Erfindung auch eine hydraulische Lenkeinrichtung mit einer derartigen Steuervorrichtung und einem Lenkaktuator, der von dem Ventil der Steuervorrichtung ansteuerbar ist, das als Richtungsventil ausgebildet in seiner unbetätigten Stellung die fluidführende Verbindung zwischen einer Druckversorgungseinrichtung und dem Lenkaktuator sperrt und in seiner betätigten Stellung den Lenkaktuator entweder in die eine oder in die andere Lenkrichtung ansteuert.

Im Folgenden wird eine erfindungsgemäße Steuervorrichtung anhand der Zeichnung näher erläutert. Dabei zeigen in prinzipieller und nicht maßstäblicher Darstellung die
- Fig. 1: in einer schematischen Blockdarstellung die erfindungsgemäße Steuervorrichtung;
- Fig. 2: in einer schematisch vereinfachten Prinzipdarstellung den Aufbau eines Teiles des Lenksensors der Steuervorrichtung aus Fig. 1; und
- Fig. 3 und 4: in einer schematischen Blockdarstellung jeweils einen anderen Teil des Lenksensors für die Ansteuerung einer einen bzw. einer anderen Magnetbetätigungseinrichtung eines Ventils der Steuervorrichtung aus Fig. 1.

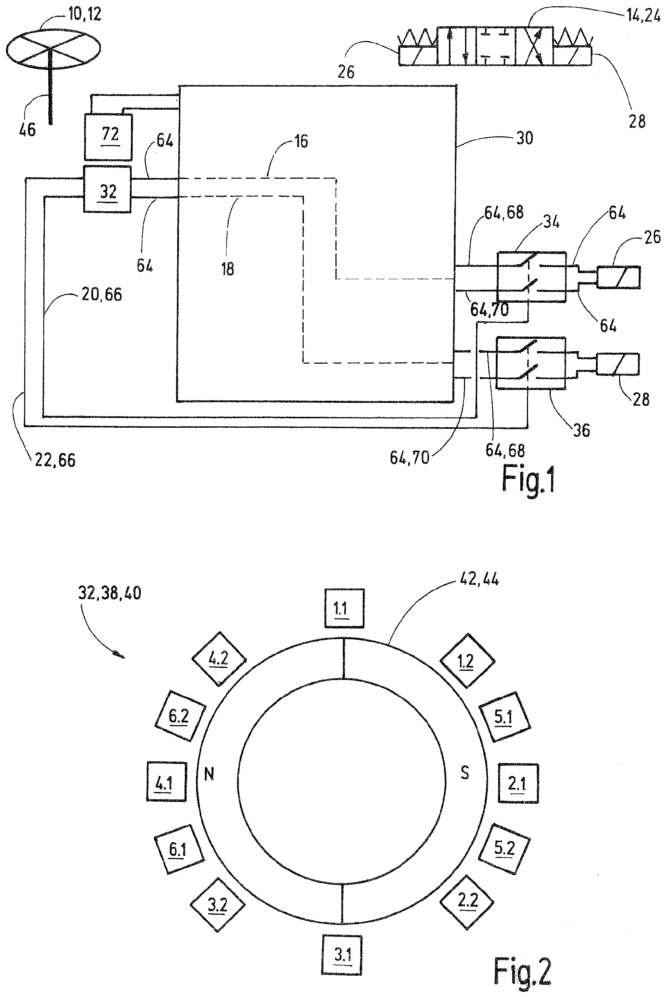

Fig. 1 zeigt eine erfindungsgemäße Steuervorrichtung, die eine Steuereingabeeinrichtung 10 in Form eines Handlenkrades 12 und ein elektromagnetisch ansteuerbares Ventil 14 aufweist. Das Ventil 14 ist in Abhängigkeit von an der Steuereingabeeinrichtung 10 erfassten Lenksollwerten über zumindest einen ersten Steuerpfad 16, 18, der zwischen der Steuereingabeeinrichtung 10 und dem Ventil 14 ausgebildet ist, elektromagnetisch ansteuerbar. Die Steuervorrichtung ist derart eingerichtet, dass in Abhängigkeit von an der Steuereingabeeinrichtung 10 erfassten Lenksollwerten über jeweils einen dem jeweiligen ersten Steuerpfad 16, 18 zugeordneten zweiten Steuerpfad 20, 22, der sich von jedem ersten Steuerpfad 16, 18 vollständig unterscheidet, dieser erste Steuerpfad 16, 18 außer Kraft setzbar ist, wenn dieser aktuell in Kraft ist, oder in Kraft setzbar ist, wenn dieser aktuell außer Kraft ist.

Das Ventil 14 weist einen Ventilkolben 24 auf, der mittels auf gegenüberliegenden Seiten des Ventilkolbens 24 angeordneten Magnetbetätigungseinrichtungen 26, 28 in einander entgegengesetzte Richtungen verfahrbar ist.

Die Steuervorrichtung weist zudem eine Steuereinheit 30 und einen Lenkradsensor 32 auf, der Lenksollwerte am Handlenkrad 12 erfasst und ein Lenksignal ausgibt, das Informationen über den Lenkwinkel und gegebenenfalls die Lenkraddrehzahl des Handlenkrades 12 enthält. Die Steuereinheit 30 ist ein Steuergerät der Kategorie 2 nach DIN EN ISO 13849. Der Lenkradsensor 32 ist an die Eingangsseite der Steuereinheit 30 angeschlossen, an deren Ausgangsseite die beiden Magnetbetätigungseinrichtungen 26, 28 des Ventils 14 angeschlossen sind. Die Strecke von inklusive dem Lenksensor 32 zu inklusive der einen 26 und der anderen 28 Magnetbetätigungseinrichtung, auf der die Lenksollwerte zunächst erfasst, dann verarbeitet werden und schließlich von der Steuereinheit 30 in Abhängigkeit der verarbeiteten Sollwerte die jeweilige Magnetbetätigungseinrichtung 26, 28 für eine Verfahrbewegung des Ventilkolbens 24 des Ventils 14 angesteuert wird, stellt zumindest einen Teil eines ersten 16 bzw. eines weiteren ersten 18 Steuerpfades dar.

Die Steuervorrichtung weist des Weiteren einen 34 und einen weiteren 36 Schalter auf, die zwischen der Steuereinheit 30 und dem Ventil 14 in dem ersten 16 bzw. dem weiteren ersten 18 Steuerpfad angeordnet sind, zwecks Unterbrechens und Schließens des jeweiligen ersten Steuerpfades 16, 18, was dem außer Kraft bzw. in Kraft setzen dieses Steuerpfades 16, 18 entspricht. Der jeweilige Schalter 34, 36 ist in Form eines elektromechanischen Relais bzw. Halbleiter-Relais ausgebildet. Ausgangsseitig ist der Lenkradsensor 32 zusätzlich an die beiden Schalter 34, 36 angeschlossen, zwecks Ansteuerung des jeweiligen Schalters 34, 36 zum Unterbrechen oder Schließen des jeweiligen ersten Steuerpfades 16, 18. Die Strecke von inklusive dem Lenkradsensor 32 zu dem einen 34 und dem weiteren 36 Schalter stellt zumindest einen Teil eines zweiten 20 bzw. eines weiteren zweiten 22 Steuerpfades dar, die beide an der Steuereinheit 30 vorbeigeführt sind.

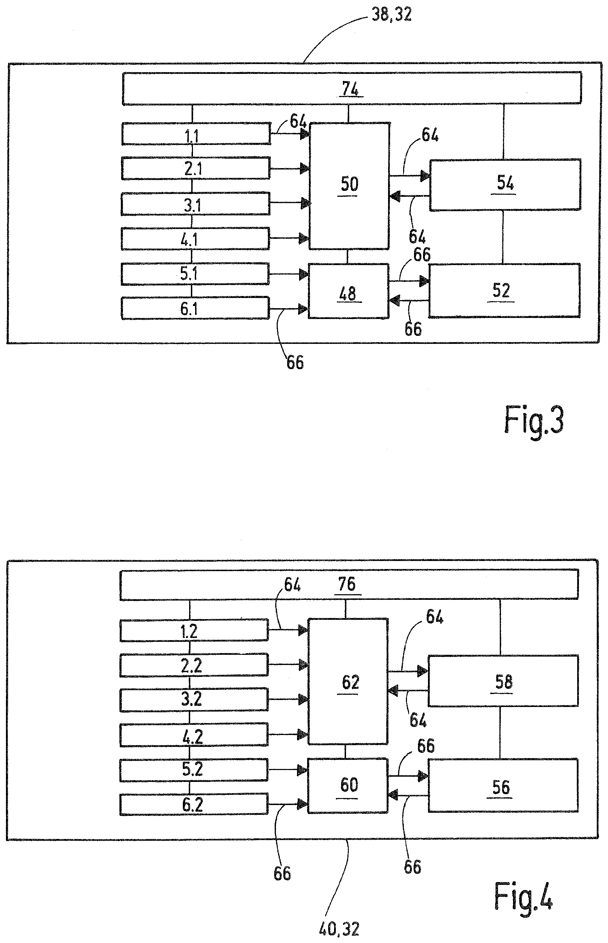

Der Lenkradsensor 32 weist zwei Lenk-Sensoreinrichtungen 38, 40 auf. Fig. 2 zeigt einen Teil beider Sensoreinrichtungen 38, 40; Fig. 3 und Fig. 4 zeigen einen sich mit dem Teil aus Fig. 2 überschneidenden anderen Teil der einen 38 bzw. der anderen 40 Sensoreinrichtung. Die beiden Lenk-Sensoreinrichtungen 38, 40 weisen als einzige gemeinsame Komponente einen Permanentmagneten 42 in Form eines magnetischen Polrings 44 auf, der einen Nord- N und einen Südpol S aufweist und der an einer zu dem Handlenkrad 12 drehfesten Lenksäule 46 koaxial zu dieser drehfest angebracht ist. In Radialrichtung von dem Permanentmagneten 42 beabstandet und in Umfangsrichtung um den Permanentmagneten 42 herum voneinander beabstandet verteilt, sind mehrere Messfühler 1.1 bis 6.1; 1.2 bis 6.2 der Lenk-Sensoreinrichtungen 38, 40 in Form von einzelnen Hall-Sensoren angeordnet. Jeder Messfühler 1.1 bis 6.1; 1.2 bis 6.2 erfasst die magnetische Flussdichte des Magnetfeldes des Permanentmagneten 42 und gibt an seinem Ausgang Werte, insbesondere Spannungswerte, aus, die proportional zu der magnetischen Flussdichte sind. Diese Werte stellen die Lenksollwerte dar.

Jede Sensoreinrichtung 38, 40 weist zwei Gruppen von Messfühlern 1.1 bis 4.1, 5.1 und 6.1; 1.2 bis 4.2, 5.2 und 6.2 auf, in der sich jeweils eine gerade Anzahl von Messfühlern befindet. So unterscheiden sich die Lenksollwerte zur Ansteuerung des Ventils 14 auf dem jeweiligen ersten Steuerpfad 16, 18 von den Lenksollwerten zum außer Kraft oder in Kraft setzen des jeweiligen ersten Steuerpfades 16, 18 über den jeweiligen zweiten Steuerpfad 20, 22 gegebenenfalls hinsichtlich ihres Wertes, jedoch jedenfalls in Bezug auf den Messfühler, durch den sie erfasst werden.

Vorzugsweise weist jede Sensoreinrichtung 38, 40 sechs Messfühler 1.1 bis 6.1; 1.2 bis 6.2 auf. Die Messfühler 1.1 bis 6.1, 1.2 bis 6.2 können sich in Bezug auf den Permanentmagneten 42 paarweise gegenüberliegen. Beispielsweise weist die eine Sensoreinrichtung 38 die Messfühler 1.1 bis 6.1, mit dem Uhrzeigersinn gemessen, bei 0 und 180 Grad, bei 90 und 270 Grad sowie bei ca. 70 und ca. 250 Grad auf, wohingegen die andere Sensoreinrichtung 40 die Messfühler 1.2 bis 6.2 bei 45 und 225 Grad, bei 135 und 315 Grad sowie bei ca. 110 und ca. 290 Grad aufweist. Diese konkrete Anordnung der Messfühler 1.1 bis 6.1; 1.2 bis 6.2 ist lediglich beispielhaft zur Veranschaulichung des grundlegenden Prinzips gewählt, so dass eine beliebige andere, sachdienliche Anordnung der Messfühler 1.1 bis 6.1; 1.2 bis 6.2 ebenso denkbar ist.

Nachfolgend werden die ansonsten hinsichtlich des Aufbaus einander entsprechenden beiden Sensoreinrichtungen 38, 40 anhand der einen Sensoreinrichtung 38 näher erläutert.

Eine Gruppe der Messfühler 5.1, 6.1 der einen Sensoreinrichtung 38 zum Erzeugen eines Schaltsignals für den einen Schalter 34 ist an die Eingangsseite einer Signalerzeugungseinrichtung 48 der einen Sensoreinrichtung 38 angeschlossen. Insbesondere umfasst die eine Gruppe zwei Messfühler 5.1, 6.1, die um 180 Grad zueinander versetzt angeordnet sein können. Das Schaltsignal ist ein Spannungssignal. Eine andere Gruppe der Messfühler 1.1 bis 4.1 dieser einen Sensoreinrichtung 38 ist an die Eingangsseite einer weiteren Signalerzeugungseinrichtung 50 zum Erzeugen eines Lenksignals des ersten Steuerpfades 16 angeschlossen. Insbesondere umfasst die andere Gruppe vier Messfühler 1.1 bis 4.1, von denen jeder um 90 Grad versetzt zu seinem jeweiligen benachbarten Messfühler 1.1 bis 4.1 angeordnet sein kann. Das Lenksignal ist ein Stromsignal; denkbar wäre jedoch auch, dass das Lenksignal ein CAN-Bus-Signal ist. Die eine 48 und die weitere 50 Signalerzeugungseinrichtung sind jeweils als Auswertelogik ausgebildet, der ein Auswertealgorithmus zugrunde liegen kann. Die eine 48 und die weitere 50 Signalerzeugungseinrichtung sind, insbesondere jeweils bidirektional, an einen 52 bzw. einen weiteren Signalausgang 54 der einen Sensoreinrichtung 38 angeschlossen. Der eine Signalausgang 52, der das Schaltsignal abgibt, ist an den einen Schalter 34 und der weitere Signalausgang 54, der das Lenksignal abgibt, ist an die Steuereinheit 30 angeschlossen.

Die andere Sensoreinrichtung 40 weist von der einen Sensoreinrichtung 38 sich unterscheidende Messfühler 1.2 bis 6.2 auf und ist mit ihrem weiteren Signalausgang 58 an die Steuereinheit 30 und mit ihrem einen Signalausgang 56 an den weiteren Schalter 36 angeschlossen. So dient die Signalerzeugungseinrichtung 60 der anderen Sensoreinrichtung 40 zum Erzeugen eines Schaltsignals für den weiteren Schalter 36 und deren weitere Signalerzeugungseinrichtung 62 zum Erzeugen eines Lenksignals des Weiteren ersten Steuerpfades 18.

Der eine 16 und der weitere erste Steuerpfad 18 beinhalten die andere Gruppe von Messfühlern 1.1 bis 4.1; 1.2 bis 4.2, die weitere Signalerzeugungseinrichtung 50, 62 und den weiteren Signalausgang 54, 58, jeweils der einen 38 bzw. der anderen Sensoreinrichtung 40, die Steuereinheit 30, den einen 34 bzw. den weiteren Schalter 36 und die eine 26 bzw. die andere Magnetbetätigungseinrichtung 28 sowie diese Komponenten des jeweiligen ersten Steuerpfades 16, 18 verbindende Übertragungsmittel 64 in Form von elektrischen Leitungen. Der eine 20 und der weitere zweite Steuerpfad 22 beinhalten die eine Gruppe von Messfühlern 5.1, 6.1; 5.2, 6.2, die eine Signalerzeugungseinrichtung 48, 60 und den einen Signalausgang 52, 56, jeweils der einen 38 bzw. der anderen Sensoreinrichtung 40 sowie die jeweiligen Übertragungsmittel 66 in Form von elektrischen Leitungen, die diese Komponenten des jeweiligen zweiten Steuerpfades 20, 22 miteinander und den jeweiligen Signalausgang 52, 56 mit dem einen 34 bzw. dem weiteren Schalter 36 verbinden. Der eine 20 und der weitere zweite Steuerpfad 22 sind dem einen 16 bzw. dem weiteren ersten Steuerpfad 18 zugeordnet.

Jede elektrische Verbindung zwischen der Steuereinheit 30 und der einen 26 bzw. der anderen Magnetbetätigungseinrichtung 28 ist zweiadrig ausgeführt. Die eine 68 (high-side) und die andere Ader 70 (low-side) sind an das eine bzw. das andere Ende einer in den Figuren nicht gezeigten Spule der jeweiligen Magnetbetätigungseinrichtung 26, 28 angeschlossen. Der jeweilige Schalter 34, 36 unterbricht oder schließt, wie in Fig. 1 gezeigt, beide Adern 68, 70 der jeweiligen Verbindung gleichzeitig, jedoch ist es auch denkbar, dass dieser Schalter 34, 36 in nur einer der beiden Adern 68, 70 vorgesehen ist, also nur eine der beiden Adern 68, 70 unterbricht oder schließt.

Des Weiteren ist jeweils eine Stromversorgung 72, 74, 76 für die Steuereinheit 30, die eine 38 und die andere Sensoreinrichtung 40 vorgesehen.

Die Steuervorrichtung ist Teil einer hydraulischen Lenkeinrichtung, die neben der Steuervorrichtung einen in den Figuren nicht dargestellten Lenkaktuator aufweist, der von dem Ventil 14 der Steuervorrichtung in Form eines Richtungsventils fluidführend ansteuerbar ist, das in seiner unbetätigten Stellung die fluidführende Verbindung zwischen einer in den Figuren nicht dargestellten Druckversorgungseinrichtung und dem Lenkaktuator sperrt und in seiner betätigten Stellung den Lenkaktuator entweder in die eine oder in die andere Lenkrichtung ansteuert. Für die weitere Ausgestaltung der hydraulischen Lenkeinrichtung wird auf die DE 10 2020 006 585 Bezug genommen.

Im Folgenden wird die Funktion der erfindungsgemäßen Steuervorrichtung näher erläutert:
Bei einer Drehbewegung des Permanentmagneten 42 im Rahmen einer Lenkbewegung am Handlenkrad 12 ändert sich die Ausrichtung des Magnetfeldes des Magneten, wobei die Messfühler 1.1 bis 6.1; 1.2 bis 6.2 der jeweiligen Gruppe der einen 38 und der anderen Sensoreinrichtung 40 jeweils gruppenunabhängig voneinander die Änderungen des magnetischen Flusses erfassen. Auf dem einen 20 und dem weiteren zweiten Steuerpfad 22 errechnen in Abhängigkeit der Lenksollwerte der jeweiligen einen Gruppe der Messfühler 5.1, 6.1; 5.2, 6.2 die beiden Signalerzeugungseinrichtungen 48, 60 unabhängig voneinander jeweils ein Schaltsignal in Form eines Spannungssignals, mittels denen die beiden Schalter 34, 36 zum Unterbrechen oder Schließen des jeweiligen ersten Steuerpfades 16, 18 angesteuert werden.

Zeitgleich errechnen die beiden weiteren Signalerzeugungseinrichtungen 50, 62 auf dem einen 16 und dem weiteren ersten Steuerpfad 18 unabhängig voneinander jeweils ein Lenksignal in Form eines Stromsignals, das Informationen bezüglich des Lenkwinkels und gegebenenfalls der Lenkraddrehzahl des Lenkhandrades 12 beinhaltet, in Abhängigkeit der Lenksollwerte der jeweiligen anderen Gruppe der Messfühler 1.1 bis 4.1; 1.2 bis 4.2. Die Lenksignale werden auf dem jeweiligen ersten Steuerpfad 16, 18 der Steuereinheit 30 übermittelt, die in Abhängigkeit des Lenksignals der einen Sensoreinrichtung 38 auf dem einen ersten Steuerpfad 16 ein Ansteuersignal für die eine Magnetbetätigungseinrichtung 26 und in Abhängigkeit des Lenksignals der anderen Sensoreinrichtung 40 auf dem weiteren ersten Steuerpfad 18 ein Ansteuersignal für die andere Magnetbetätigungseinrichtung 28 abgibt. Das jeweilige von der Steuereinheit 30 abgegebene Ansteuersignal erreicht, wenn der in dem jeweiligen ersten Steuerpfad 16, 18 angeordnete Schalter 34, 36 geschlossen ist, die Spule der jeweiligen Magnetbetätigungseinrichtung 26, 28 und bestromt diese. Wenn der in dem jeweiligen ersten Steuerpfad 16, 18 angeordnete Schalter 34, 36 geöffnet ist, ist eine Bestromung der jeweiligen Magnetbetätigungseinrichtung 26, 28 jedoch verhindert.

Für eine Bestromung einer jeweiligen Magnetbetätigungseinrichtung 26, 28 muss also zusätzlich zu einem von der Steuereinheit 30 abgegebenen entsprechenden Ansteuersignal auf einem jeweiligen ersten Steuerpfad 16, 18 der Schalter 34, 36 über den diesem ersten Steuerpfad 16, 18 zugeordneten jeweiligen zweiten Steuerpfad 20, 22 ein Schaltsignal im Sinne eines Freigabesignals von dem Lenksensor 32 empfangen, das den Schalter 34, 36 schließt, wenn dieser geöffnet ist, oder geschlossen hält, wenn dieser bereits geschlossen ist, so dass eine Bestromung dieser Magnetbetätigungseinrichtung 26, 28 erfolgen kann. Dadurch ist die Betriebssicherheit der Steuervorrichtung verbessert.

Darüber hinaus werden die beiden Schalter 34, 36 von dem Lenksensor 32, insbesondere von den beiden Signalerzeugungseirichtungen 48, 60, derart angesteuert, dass, wenn der Schalter 34 in dem zu der einen Magnetbetätigungseinrichtung 26 führenden ersten Steuerpfad 16 eine Bestromung der einen Magnetbetätigungseinrichtung 26 zulässt, gleichzeitig der Schalter 36 in dem zu der anderen Magnetbetätigungseinrichtung 28 führenden weiteren ersten Pfad 18 diesen ersten Pfad 18 unterbricht und damit ein Bestromen der anderen Magnetbetätigungseinrichtung 28 verhindert und umgekehrt. So ist, zumindest wenn das Handlenkrad 12 für ein Einlenken gedreht ist, einer der Schalter 34, 36 geschlossen und der andere Schalter 36, 34 geöffnet. Dadurch wird ausgeschlossen, dass der Ventilkolben 24 des Ventils 14 im Fehlerfall gleichzeitig durch beide Magnetbetätigungseinrichtungen 26, 28 für Verfahrbewegungen in einander entgegengesetzte Richtungen betätigt wird, was die Betriebssicherheit der Steuervorrichtung weiter verbessert.

Bei einem Einsatz der erfindungsgemäßen Steuervorrichtung in einer hydraulischen Lenkeinrichtung sind durch diese Steuervorrichtung fehlerhafte, also ungewollte, Lenkbewegungen verhinderbar. So ist mittels der erfindungsgemäßen Steuervorrichtung sichergestellt, dass bei einer Drehbewegung des Handlenkrades 12 in eine Drehrichtung die für eine entsprechende Lenkrichtung nicht zuständige Magnetbetätigungseinrichtung 26, 28 des Ventils 14 unangesteuert verbleibt, selbst wenn die Steuereinheit fehlerhaft ein Ansteuersignal an diese Magnetbetätigungseinrichtung 26, 28 abgibt. Dadurch ist verhindert, dass der Lenkaktuator fehlerhaft in eine der gewollten Lenkrichtung entgegengesetzte Lenkrichtung angesteuert wird.

## Patentansprüche

1. Steuervorrichtung für eine hydraulische Lenkeinrichtung, mit einer Steuereingabeeinrichtung (10) und einem elektrisch betätigbaren Ventil (14) zur Ansteuerung eines Lenkaktuators der Lenkeinrichtung, das in Abhängigkeit von an der Steuereingabeeinrichtung (10) erfassten Lenksollwerten über zumindest einen ersten Steuerpfad (16, 18) zwischen der Steuereingabeeinrichtung (10) und dem Ventil (14) elektrisch ansteuerbar ist, wobei die Steuervorrichtung derart eingerichtet ist, dass der jeweilige erste Steuerpfad (16, 18) in Abhängigkeit von an der Steuereingabeeinrichtung (10) erfassten Lenksollwerten über jeweils einen diesem ersten Steuerpfad (16, 18) zugeordneten und sich zumindest teilweise von jedem ersten Steuerpfad (16, 18) unterscheidenden zweiten Steuerpfad (20, 22) außer Kraft setzbar ist, wenn dieser erste Steuerpfad (16, 18) in Kraft ist, oder in Kraft setzbar ist, wenn dieser (16, 18) außer Kraft ist, und
wobei in dem jeweiligen zweiten Steuerpfad (20, 22) eine Signalerzeugungseinrichtung (48, 60) zum Erzeugen eines Schaltsignals in Abhängigkeit der an der Steuereingabeeinrichtung (10) erfassten Lenksollwerte vorgesehen ist, mittels dem derjenige erste Steuerpfad (16, 18) entweder unterbrechbar oder schließbar ist, dem dieser zweite Steuerpfad (20, 22) zugeordnet ist,
**dadurch gekennzeichnet,**
**dass** in dem jeweiligen ersten Steuerpfad (16, 18) ein Schalter (34, 36) angeordnet ist, der durch das jeweilige Schaltsignal angesteuert diesen ersten Steuerpfad (16, 18) entweder unterbricht oder schließt,
**dass** zur Erzeugung des Lenksignals eines jeweiligen ersten Steuerpfades (16, 18) und zur Erzeugung des Schaltsignals, mittels dem dieser erste Steuerpfad (16, 18) unterbrechbar oder schließbar ist, jeweils zumindest ein Messfühler (1.1 bis 4.1, 5.1, 6.1; 1.2 bis 4.2, 5.2, 6.2) vorgesehen ist, die unabhängig voneinander Lenksollwerte an der Steuereingabeeinrichtung (10) erfassen,
**dass** ein Ventilkolben (24) des Ventils (14) mittels auf gegenüberliegenden Seiten des Ventilkolbens (24) angeordneten Magnetbetätigungseinrichtungen (26, 28) in einander entgegengesetzte Richtungen verfahrbar ist,
**dass** die Steuervorrichtung derart eingerichtet ist, dass, wenn der jeweilige Schalter (34, 36) in dem jeweiligen zu der einen Magnetbetätigungseinrichtung (26, 28) führenden ersten Steuerpfad (16, 18) eine Bestromung der einen Magnetbetätigungseinrichtung (26, 28) zulässt, gleichzeitig der jeweilige Schalter (36, 34) in dem jeweiligen zu der anderen Magnetbetätigungseinrichtung (28, 26) führenden ersten Pfad (18, 16) diesen ersten Pfad (18, 16) zumindest teilweise unterbricht und damit ein Bestromen der anderen Magnetbetätigungseinrichtung (28, 26) verhindert, und
**dass** für die Steuerung der Bestromung der einen Magnetbetätigungseinrichtung (26) mehrere Messfühler (1.1 bis 6.1) vorgesehen sind, die unabhängig von für die Steuerung der Bestromung der anderen Magnetbetätigungseinrichtung (28) vorgesehenen mehreren Messfühlern (1.2 bis 6.2) Lenksollwerte an der Steuereingabeeinrichtung (10) erfassen.

2. . Steuervorrichtung nach Anspruch 1, **dadurch gekennzeichnet, dass** eine in jedem ersten Steuerpfad (16, 18) angeordnete Steuereinheit (30) vorgesehen ist, der auf dem jeweiligen ersten Steuerpfad (16, 18) ein von den Lenksollwerten abhängiges Lenksignal zugeführt wird und die auf diesem ersten Steuerpfad (16, 18) ein Ansteuersignal zur Ansteuerung des Ventils (14) abgibt, und dass jeder erste Steuerpfad (16, 18) durch die Steuereinheit (30) hindurch und jeder zweite Steuerpfad (20, 22) an der Steuereinheit (30) vorbei geführt ist.

3. . Steuervorrichtung nach Anspruch 1 oder 2, **dadurch gekennzeichnet, dass** sich jeder zweite Steuerpfad (20, 22) vollständig von jedem ersten Steuerpfad (16, 18) unterscheidet.

4. . Steuervorrichtung nach einem der vorstehenden Ansprüche, **dadurch gekennzeichnet, dass** in dem jeweiligen ersten Steuerpfad (16, 18) eine weitere Signalerzeugungseinrichtung (50, 62) zum Erzeugen des Lenksignals in Abhängigkeit der an der Steuereingabeeinrichtung (10) erfassten Lenksollwerte vorgesehen ist.

5. . Hydraulische Lenkeinrichtung mit einer Steuervorrichtung nach einem der vorstehenden Ansprüche und einem Lenkaktuator, der von dem Ventil (14) der Steuervorrichtung ansteuerbar ist, das als Richtungsventil ausgebildet, in seiner unbetätigten Stellung die fluidführende Verbindung zwischen einer Druckversorgungseinrichtung und dem Lenkaktuator sperrt und in seiner betätigten Stellung den Lenkaktuator entweder in die eine oder in die andere Lenkrichtung ansteuert.

## Claims

1. Control device for a hydraulic steering apparatus having a control input apparatus (10) and an electrically actuatable valve (14) for actuating a steering actuator of the steering apparatus, which, as a function of steering setpoints recorded on the control input apparatus (10), can be electrically actuated via at least one first control path (16, 18) between the control input apparatus (10) and the valve (14), wherein the control device is set up such that the respective first control path (16, 18) can be deactivated as a function of steering setpoints recorded on the control input apparatus (10) via a second control path (20, 22) which is in each case assigned to said first control path (16, 18) and differs at least partially from each first control path (16, 18) when said first control path (16, 18) is activated, or can be activated if said first control path (16, 18) has been deactivated, and
wherein a signal generating apparatus (48, 60) is provided in the respective second control path (20, 22) to generate a switching signal as a function of the steering setpoints recorded on the control input apparatus (10), by means of which signal the first control path (16, 18) to which this second control path (20, 22) is assigned, can either be interrupted or closed,
**characterised in that**
a switch (34, 36) is arranged in the respective first control path (16, 18), said switch being actuated by the respective switching signal and either interrupting or closing said first control path (16, 18),
in order to generate the steering signal of a respective first control path (16, 18) and to generate the switching signal by means of which said first control path (16, 18) can be interrupted or closed, at least one sensor (1.1 to 4.1, 5.1, 6.1; 1.2 to 4.2, 5.2, 6.2) is provided in each case, which record steering setpoints on the control input apparatus (10) independently of each other,
a valve piston (24) of the valve (14) can be moved in mutually opposite directions by means of solenoid actuating devices (26, 28) arranged on opposite sides of the valve piston (24), **in that** the control device is set up such that, when the respective switch (34, 36) in the respective first control path (16, 18) leading to said one solenoid actuating device (26, 28) permits said one solenoid actuating device (26, 28) to be energised, at the same time the respective switch (36, 34) in the respective first path (18, 16) leading to the other solenoid actuating device (28, 26) at least partially interrupts said first path (18, 16) and thus prevents the other solenoid actuating device (28, 26) being energised, and
**in that** a plurality of sensors (1.1 to 6.1) are provided to control energisation of said one solenoid actuating device (26), said sensors recording steering setpoints on the control input apparatus (10) independently of the plurality of sensors (1.2 to 6.2) provided to control energisation of the other solenoid actuating device (28).

2. Control device according to claim 1, **characterised in that** a control unit (30) arranged in each first control path (16, 18) is provided, to which a steering signal dependent on the steering setpoints is supplied on the respective first control path (16, 18) and which issues an actuation signal for actuation of the valve (14) on said first control path (16, 18), and **in that** each first control path (16, 18) is passed through the control unit (30) and each second control path (20, 22) is passed around the control unit (30).

3. Control device according to either claim 1 or claim 2, **characterised in that** each second control path (20, 22) is completely different from each first control path (16, 18).

4. Control device according to any of the preceding claims, **characterised in that**, in the respective first control path (16, 18), a further signal generating apparatus (50, 62) is provided to generate the steering signal as a function of the steering setpoints recorded on the control input apparatus (10).

5. Hydraulic steering apparatus having a control device according to any of the preceding claims and a steering actuator that can be actuated by the valve (14) of the control device, which is configured as a directional valve and, in its unactuated position, blocks the fluid-conveying connection between a pressure supply apparatus and the steering actuator, and, in its actuated position, actuates the steering actuator in either one or the other steering direction.

## Revendications

1. Système de commande d'un dispositif hydraulique de direction comprenant un dispositif (10) d'entrée de commande et une soupape (14), pouvant être actionnée électriquement, de commande d'un actionneur de direction du dispositif de direction, qui, en fonction de valeurs de consigne de direction détectées au dispositif (10) d'entrée de commande, peut être commandée électriquement en passant par au moins un premier chemin (16, 18) de commande entre le dispositif (10) d'entrée de commande et la soupape (14), dans lequel le système de commande est agencé de manière à ce que le premier chemin (16, 18) de commande respectif puisse être mis hors force, en fonction de valeurs de consigne de direction détectées sur le dispositif (10) d'entrée de commande, en passant respectivement par un deuxième chemin (20, 22) de commande associé à ce premier chemin (16, 18) de commande et se distinguant au moins en partie de chaque premier chemin (16, 18) de commande, si ce premier chemin (16, 18) de commande est en force, ou peut être mis en force, lorsque celui-ci (16, 18) est hors force, et
dans lequel dans le deuxième chemin (20, 22) respectif de commande, il est prévu un dispositif (48, 60) de production d'un signal pour la production d'un signal de coupure en fonction des valeurs de consigne de direction détectées au dispositif (10) d'entrée de commande, au moyen duquel le premier chemin (16, 18) respectif de commande ou bien peut être interrompu ou bien peut être fermé, auquel ce deuxième chemin (20, 22) de commande est associé,
**caractérisé en ce que**
dans le premier chemin (16, 18) respectif de commande, est monté un interrupteur (34, 36), qui commandé par le signal de coupure respectif ou bien interrompt ou bien ferme ce premier chemin (16, 18) de commande,
**en ce que**, pour la production du signal de direction d'un premier chemin (16, 18) respectif de commande et pour la production du signal de coupure, au moyen duquel ce premier chemin (16, 18) de commande peut être interrompu ou peut être fermé, il est prévu respectivement au moins une sonde (1,1 à 4,1, 5,1, 6,1 ; 1,2 à 4,2, 5,2, 6,2) de mesure, qui détecte des valeurs de consigne de direction indépendamment les unes des autres au dispositif (10) d'entrée de commande,
**en ce qu'**un piston (24) de la soupape (14) peut, au moyen de dispositifs (26, 28) d'actionnement magnétique montés sur des côtés opposés du piston (24) de la soupape, être déplacé dans des sens opposés l'un à l'autre,
**en ce que** le dispositif de commande est agencé de manière à ce que, si l'interrupteur (34, 36) respectif autorise, dans le premier chemin (16, 18) de commande respectif menant au dispositif (26, 28) d'actionnement magnétique, une alimentation en courant du un dispositif (26, 28) d'actionnement magnétique, en même temps, l'interrupteur (36, 34) respectif interrompt au moins en partie, dans le premier chemin (18, 16) respectif menant à l'autre dispositif (28, 26) d'actionnement magnétique, ce premier chemin (18, 16) et empêche ainsi une alimentation en courant de l'autre dispositif (28, 26) d'actionnement magnétique, et
**en ce qu'**il est prévu pour la commande de l'alimentation en courant du un dispositif (26) d'actionnement magnétique plusieurs sondes (1,1 à 6,1) de mesure, qui indépendamment de plusieurs sondes (1,2 à 6,2) de mesure prévues pour la commande de l'alimentation au courant de l'autre dispositif (28) d'actionnement magnétique, détectent des valeurs de consigne de direction au dispositif (10) d'entrée de commande.

2. Système de commande suivant la revendication 1, **caractérisé en ce qu'**il est prévu, montée dans chaque premier chemin (16, 18) de commande, une unité (30) de commande, à laquelle est envoyé sur le premier chemin (16, 18) respectif de commande un signal de direction, qui dépend des valeurs de consigne de direction et qui, sur ce premier chemin (16, 18) de commande, donne un signal de commande pour la commande de la soupape (14) et **en ce que** chaque premier chemin (16, 18) de commande traverse l'unité (30) de commande et chaque deuxième chemin (20, 22) de commande passe devant l'unité (30) de commande.

3. Système de commande suivant la revendication 1 ou 2, **caractérisé en ce que** chaque deuxième chemin (20, 22) de commande se distingue entièrement de chaque premier chemin (16, 18) de commande.

4. Système de commande suivant l'une des revendications précédentes, **caractérisé en ce que** dans le premier chemin (16, 18) respectif de commande est prévu un autre dispositif (50, 62) de production de signal pour la production du signal de direction en fonction des valeurs de consigne de direction détectées au dispositif (10) d'entrée de commande.

5. Dispositif hydraulique de direction comprenant un système de commande suivant l'une des revendications précédentes et un actionneur de direction, qui peut être commandé par la soupape (14) du système de commande et qui, constitué en soupape directionnelle, dans sa position non actionnée, barre la communication fluidique entre un dispositif d'alimentation en pression et l'actionneur de direction et, dans sa position actionnée, commande l'actionneur de direction dans le un ou dans l'autre sens de direction.
